# EUROPEAN PATENT APPLICATION

(11) **EP 2 779 086 A1**
(43) Date of publication of application: **17.09.2014**
(21) Application number: 14159618.9
(22) Date of filing: 13.03.2014
(51) Int. Cl.: G06Q 50/06

(54) **Performance monitoring and analysis for power plants**

(30) Priority: 15.03.2013 US 201313833064
(71) Applicant: General Electric Company, Schenectady, New York 12345 (US)
(72) Inventor: Jiang, Xiaomo, Atlanta, GA 30339 (US); Chandra, Dibakar, Atlanta, GA 30339-8402 (US); Foster, Craig Joseph, Atlanta, GA 30339 (US); Heda, Sanjeev Shyam, Atlanta, GA 30339 (US); Herbert, William Darryl, Atlanta, GA 30339-8402 (US); Wood, Scott Alan, Atlanta, GA 30339-8402 (US); Yoo, Benjamin, Atlanta, GA 30339-8402 (US)
(74) Representative: Picker, Madeline Margaret

(57) **Abstract**

A system 10 for performance monitoring of power plants 20 is provided. The system includes a plurality of power plants 20 respectively owned and operated by a plurality of customers, a monitoring center 40, at least one of the customers and the monitoring center 40 including a plurality of analytic algorithms configured to automate performance anomaly detection, alarming, analytics and prognosis and a secured network by which on-site monitoring (OSM) data generated at each of the plurality of the power plants 20 is receivable by the monitoring center 40. The monitoring center 40 is configured to analyze the OSM data along with site specific data for each respective power plant 20 in accordance with the plurality of analytics algorithms to derive trends and to take action with respect to each respective power plant 20 in accordance with changes and abnormalities indicated by the derived trends.

## Description

The subject matter disclosed herein relates to performance monitoring and analysis for power plants and, more particularly, to an analytics methodology and process for customer specific thermal performance monitoring of power plants.

Previous attempts at performance modeling and analysis for power plants have included a centrally controlled continuous monitoring system that was setup to track performance changes of a site via using raw and a site-specific correction approach. Also, an offline tool and process was created for site-specific performance diagnostics, prognostics, reporting as well as trouble shooting of the continuous monitoring system. A web portal has been established to provide a platform to communicate performance monitoring results with customers. Similarly, a correction based performance anomaly detection system and process have been developed.

In any case, there are presently no analytics that can be employed to automate detecting site specific performance anomalies on a real-time and automated fashion. There is no capability or process to systematically monitor the anomalies and escalate issues on fleet performance from data to performance calculation. Finally, there is no capability to track, trend and predict future performance on a continuous basis, in a real-time, automated mode.

According to one aspect of the invention, a system for performance monitoring of power plants is provided. The system includes a plurality of power plants respectively owned and operated by a plurality of customers, a monitoring center, at least one of the customers and the monitoring center including a plurality of analytic algorithms configured to automate performance anomaly detection, alarming, analytics and prognosis and a secured network by which on-site monitoring (OSM) data generated at each of the plurality of the power plants is receivable by the monitoring center. The monitoring center is configured to analyze the OSM data along with site specific data for each respective power plant in accordance with the plurality of analytics algorithms to derive trends and to take action with respect to each respective power plant in accordance with changes and abnormalities indicated by the derived trends. According to another aspect of the invention, a system for performance monitoring of power plants is provided and includes a plurality of power plants respectively owned and operated by a plurality of customers, a monitoring center, at least one of the customers and the monitoring center including a plurality of analytic algorithms configured to automate performance anomaly detection, alarming, analytics and prognosis and a secured network by which on-site monitoring (OSM) data generated at each of the plurality of the power plants is receivable by the monitoring center. The monitoring center being configured to analyze the OSM data along with site specific data for each respective power plant in accordance with the plurality of analytics algorithms to derive trends, to take action with respect to each respective power plant in accordance with changes and abnormalities indicated by the derived trends and to be supportive of a web portal broadcast over the secured network by which each of the plurality of the customers accesses the OSM data and the derived trends.

According to yet another aspect of the invention, a method of performance monitoring of power plants is provided and includes establishing a secured network by which on-site monitoring (OSM) data generated at each of a plurality of power plants is receivable by a monitoring center, analyzing the OSM data along with site specific data for each respective power plant, deriving trends from the analysis of the OSM data and the site specific data in accordance with a plurality of analytics algorithms stored at the monitoring center or at a customer site to derive trends and taking action, at the monitoring center, with respect to each respective power plant in accordance with changes and abnormalities indicated by the derived trends.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a performance monitoring and analysis system for power plants;
FIG. 2 is a schematic diagram of analytic algorithms stored at customer sites or at a central location;
FIG. 3 is a schematic diagram of web portal embodiments; and
FIG. 4 is a schematic diagram of layered degradation analytics

The detailed description explains embodiments of the invention, together with advantages and features, by way of example with reference to the drawings.

The disclosure provided below relates to analytics methodologies and processes for use with customer and site specific performance (SSP) monitoring. The analytics include multi-resolution SSP calculation, SSP tracking, offline water wash effectiveness monitoring, fleet comparison and visualization. The analytics may be employed in order to assist cross-function teams in monitoring, projecting and tracking customer SSP degradation as well as monetizing and forecasting bonus and liquidated damages on a power plant and its individual units with thermal performance guarantees. In addition, the analytics facilitate automation of proactive recommendations with relatively high accuracy as compared to previous correction methods in terms of asset usage and scheduling of maintenance and operations. Moreover, the analytics provide for a systematical analytics methodology for smart performance monitoring, remote performance testing and degradation based maintenance with ensured contract compliance.

Power generation suppliers and commercial utilities throughout the world have a vested interest in protecting asset health and maintaining performance through analysis of both historical and real time asset data. In some cases, contractual services (CS) of power generation services (PGS) offer contractual service agreements (CSA's) that integrate technical knowledge of original equipment manufacturers (OEM), remote monitoring and diagnostics and extensive fleet management experience with field service, parts and repairs to create a customized maintenance solution to protect customer assets, improve operational productivity, and reduce costs. These contracts typically stipulate certain unit performance requirements (time based) to be guaranteed via a monetized incentive program (i.e. bonuses and liquidated damages). Routine asset performance tests are conducted on site to enable a systematic approach to total plant and fleet optimization. Typically, such tests are scheduled at 6 months intervals.

A performance testing team utilizes data from the testing to monitor, control and generate additional service offerings to customers based on both historical data analysis and future projections for unit specific performance degradation. An initial performance baseline is established within each contract, against which data from future testing is measured. Magnitude and timeliness of significant changes in actual test data against the baseline can trigger internal exceptions to drive further action (e.g., a significant increase on a corrected gas turbine heat rate or a drop on a corrected output).

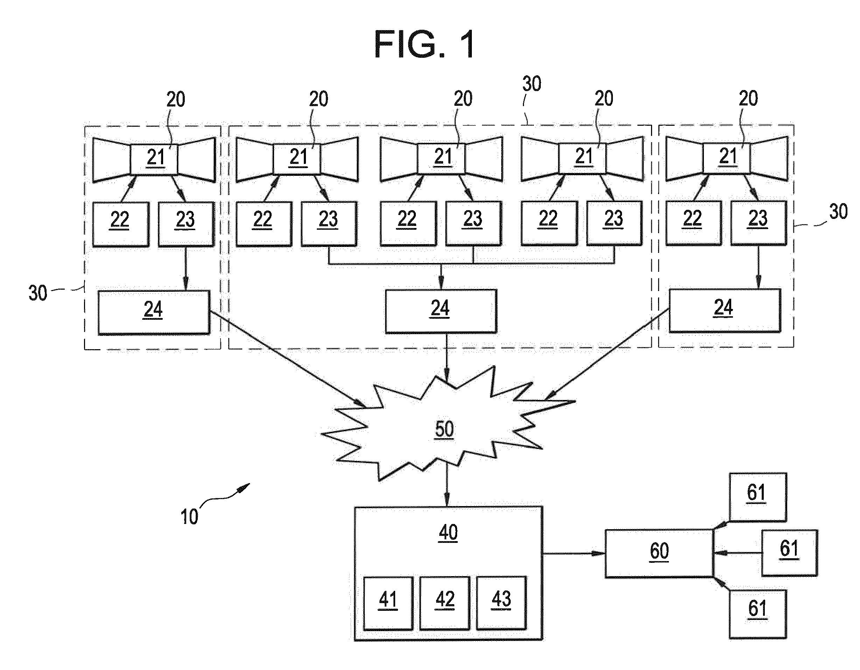

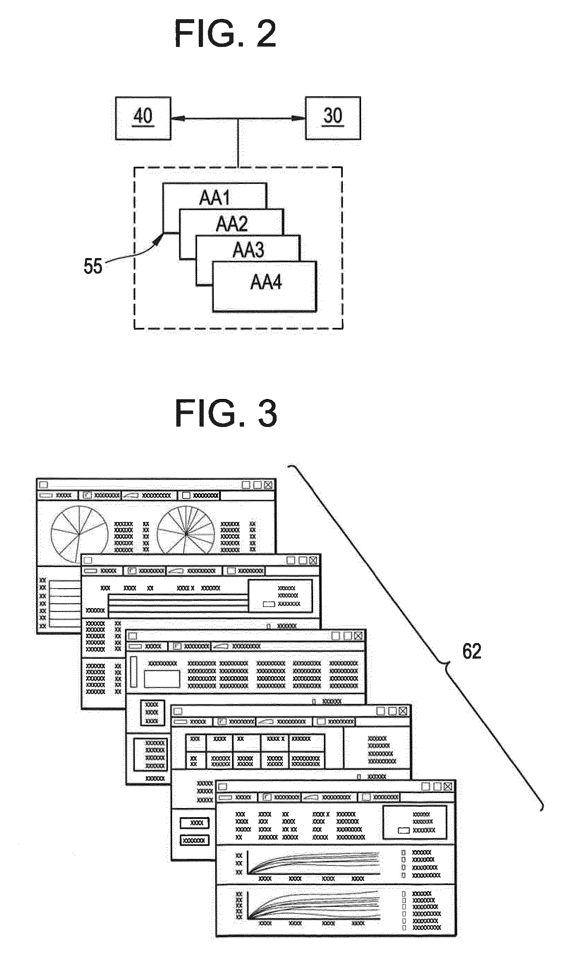

With reference to FIGS. 1 and 2, a system 10 for performance monitoring of power plants is provided. The system 10 includes a plurality of power plants 20 that are disposed remotely from one another. The power plants 20 may be simple cycle power plants with only gas turbine engines, combined cycle power plants with gas and steam turbine engine or other suitable power plant configurations and are respectively owned and operated by a plurality of customers 30. In any case, the power plants 20 are equipped with sensor arrays 21 to sense various operating conditions within the power plants 20, on-site controllers 22 to operate the individual power plants 20 and on-site monitoring (OSM) computing devices 23 that compile OSM data generated by the sensor arrays 21. The power plants 20 may be further equipped with firewall systems 24 that provide networking security. Each customer 30 may be a private or public entity and each entity may be an individual or a group of individuals acting in concert. Each customer 30 may own and operate one or more power plants 20.

The system 10 further includes a monitoring center 40 and a secured network 50 by which OSM data is receivable by the monitoring center 40. The monitoring center 40 may include a monitoring, analytics and diagnostics (MAD) warehouse 41, which stores various types of data relating to the operation and contractual situation of each of the power plants 20, a central historical database 42, which maintains a database of historical operational OSM data for each power plant 20 and is receptive of the OSM data generated by the sensor arrays 21 via the firewall systems 24, and a calculation engine 43.

In some embodiments as shown in FIG. 2, at least one or both of the customer 30 and the monitoring center 40 (i.e., the calculation engine 43) maintains a plurality of analytic algorithms (the analytic algorithms may also be stored locally at the customer 30 sites). The plurality of the analytic algorithms may be configured to automate performance anomaly detection, alarming, analytics and prognosis and can be purely data driven, statistics based or physics based.

The calculation engine 43 is configured to analyze the OSM data along with site specific data stored in the MAD warehouse 41 as well as the central historical database 42 for each respective power plant 20 in accordance with the descriptions provided below. The calculation engine 43 is further configured to derive trends from results of the analysis and to take, for example, corrective action with respect to each respective power plant 20 in accordance with changes and abnormalities identified from or indicated by the derived trends.

In addition, the system 10 includes support of a web-based portal 60. In particular, the web-based portal 60 is supported by the monitoring center 40 and is accessible to each of the customers 30 or authorized representatives thereof such that each of the customers 30 or their representatives can review the OSM data, OSM data analysis results and/or the derived trends. Such access may be obtained by way of various stationary or mobile computing devices 61 (see FIG. 1). In accordance with embodiments and, with reference to FIG. 3, the web-based portal 60 broadcasts the OSM data and/or the OSM data analysis results as at least one or more of fleet scorecards and comparisons, offline water wash statistics, descriptions of output and heat rate degradation trends and descriptions of fleet degradation comparisons 62. By enabling each of the customers 30 or authorized representatives thereof to review the OSM data, OSM data analysis results and/or the derived trends, the web-based portal 60 enables fleet issues and site specific problems to be identified and facilitates the meeting of contractual obligations.

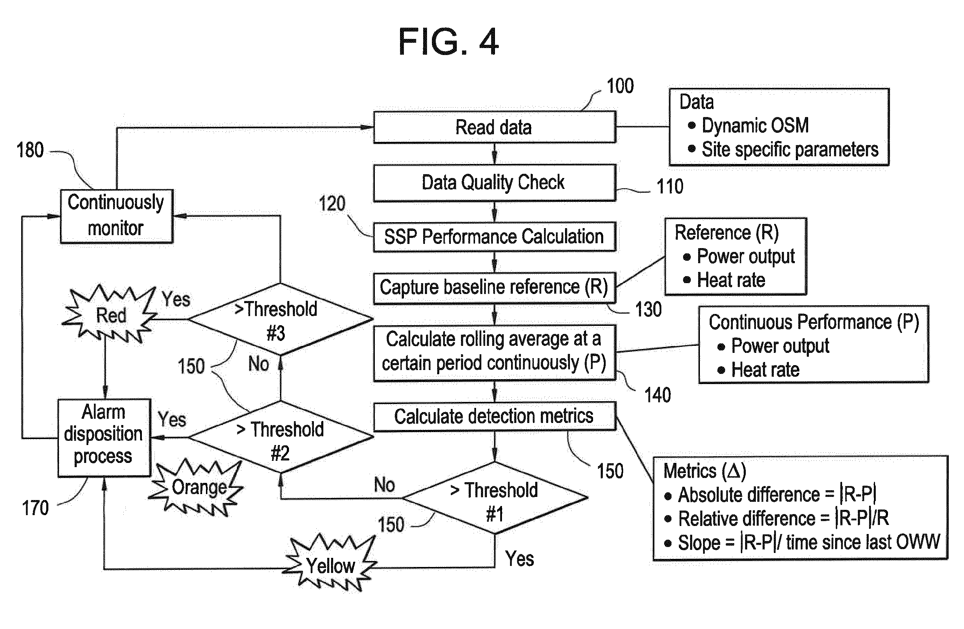

The monitoring center 40 may be particularly configured to perform site specific performance (SSP) degradation analytics, SSP aggregation analytics, SSP offline water wash analytics and SSP fleet analytics. With reference to FIG. 4, the SSP degradation analytics relates to an ability of the monitoring center 40 to review a portion of the OSM data describing degradation performance for each respective power plant 20 and to determine whether any of the power plants 20 have degraded to a point at which action (i.e., repair or replacement of components) needs to be taken.

As shown in FIG. 4, the SSP degradation analytics include an initial reading of the OSM data for respective power plant 20 (operation 100), a data quality check to insure that the OSM data is within expected parameters so that further analysis can be trusted (operation 110) and an SSP performance calculation (operation 120). The SSP performance calculation of operation 120 allows baseline reference numbers, such as power output and heat rate reference numbers, for each respective power plant 20 to be derived (operation 130), allows for continuous calculation of rolling performance averages at certain periods to be calculated (operation 140) and allows for calculation of detection metrics based on comparisons of the base reference numbers and the rolling performance averages (operation 150). If the detection metrics meet any of three or more threshold performance levels, the monitoring center 40 issues corresponding ones of three or more alarms to alert the relevant customers 30 that their power plants 20 exhibit performance degradation that needs to be addressed (operation 160). As these 3-level (or more) alarms are addressed and disposed of (operation 170), the monitoring center 40 can continue to monitor and perform the SSP degradation analytics (operation 180).

The SSP aggregation analytics relate to the ability of the monitoring center 40 to aggregate multiple resolutions of OSM data from the various power plants 20 at the remote locations. That is, the monitoring center 40 can aggregate OSM data taken at, for example, 1, 5 or 10 minute intervals at one group of power plants 20 and at, for example, daily or weekly intervals at another group of power plants 20. The SSP offline water wash analytics relate to the ability of the monitoring center 40 to take snapshots of pre-water wash and post-water wash OSM data for each of the power plants 20 and to help the customers 30 understand the impact of the offline and online water washing operations they undertake. The SSP fleet analytics relate to analyses that assist the various customers 30 in understanding how their respective power plants 20 perform relative to the fleet of power plants in current and former operation.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A system for performance monitoring of power plants, the system comprising:
   a plurality of power plants respectively owned and operated by a plurality of customers;
   a monitoring center;
   at least one of the customers and the monitoring center including a plurality of analytic algorithms configured to automate performance anomaly detection, alarming, analytics and prognosis; and
   a secured network by which on-site monitoring (OSM) data generated at each of the plurality of the power plants is receivable by the monitoring center,
   the monitoring center being configured to analyze the OSM data along with site specific data for each respective power plant in accordance with the plurality of analytics algorithms to derive trends and to take action with respect to each respective power plant in accordance with changes and abnormalities indicated by the derived trends.
2. The system according to clause 1, wherein at least one of the monitoring center and the customer is configured to perform site specific performance (SSP) degradation, aggregation, offline water wash and fleet analytics.
3. The system according to any preceding clause, wherein the monitoring center is configured to issue multi-level alarms to each respective power plant in accordance with the SSP degradation analytics.
4. The system according to any preceding clause, wherein the monitoring center is configured to perform multi-resolution aggregation of the OSM data for each respective power plant in accordance with the SSP aggregation analytics.
5. The system according to any preceding clause, wherein the monitoring center is configured to receive and analyze a portion of the OSM data relating to pre- and post-water wash effectiveness for each respective power plant in accordance with the SSP offline water wash analytics.
6. The system according to any preceding clause, wherein the monitoring center is configured to compare the OSM for each respective power plant to fleet data in accordance with the SSP fleet analytics.
7. The system according to any preceding clause, wherein the monitoring center is supportive of a web portal by which each of the plurality of the customers accesses the OSM data and the OSM data analysis results.
8. The system according to any preceding clause, wherein the web portal comprises at least one or more of fleet scorecards and comparisons, offline water wash statistics, descriptions of output and heat rate degradation trends and descriptions of fleet degradation comparisons.
9. A system for performance monitoring of power plants, the system comprising:
   a plurality of power plants respectively owned and operated by a plurality of customers;
   a monitoring center;
   at least one of the customers and the monitoring center including a plurality of analytic algorithms configured to automate performance anomaly detection, alarming, analytics and prognosis; and
   a secured network by which on-site monitoring (OSM) data generated at each of the plurality of the power plants is receivable by the monitoring center,
   the monitoring center being configured to analyze the OSM data along with site specific data for each respective power plant in accordance with the plurality of analytics algorithms to derive trends, to take action with respect to each respective power plant in accordance with changes and abnormalities indicated by the derived trends and to be supportive of a web portal broadcast over the secured network by which each of the plurality of the customers accesses the OSM data and the derived trends.
10. The system according to any preceding clause, wherein at least one of the monitoring center and the customer is configured to perform site specific performance (SSP) degradation, aggregation, offline water wash and fleet analytics.
11. The system according to any preceding clause, wherein the monitoring center is configured to issue multi-level alarms to each respective power plant in accordance with the SSP degradation analytics.
12. The system according to any preceding clause, wherein the monitoring center is configured to perform multi-resolution aggregation of the OSM data for each respective power plant in accordance with the SSP aggregation analytics.
13. The system according to any preceding clause, wherein the monitoring center is configured to receive and analyze a portion of the OSM data relating to pre- and post-water wash effectiveness for each respective power plant in accordance with the SSP offline water wash analytics.
14. The system according to any preceding clause, wherein the monitoring center is configured to compare the OSM for each respective power plant to fleet data in accordance with the SSP fleet analytics.
15. The system according to any preceding clause, wherein the web portal comprises at least one or more of fleet scorecards and comparisons, offline water wash statistics, descriptions of output and heat rate degradation trends and descriptions of fleet degradation comparisons.
16. A method of performance monitoring of power plants, the method comprising:
   establishing a secured network by which on-site monitoring (OSM) data generated at each of a plurality of power plants is receivable by a monitoring center;
   analyzing the OSM data along with site specific data for each respective power plant;
   deriving trends from the analysis of the OSM data and the site specific data in accordance with a plurality of analytics algorithms stored at the monitoring center or at a customer site to derive trends; and
   taking action, at the monitoring center, with respect to each respective power plant in accordance with changes and abnormalities indicated by the derived trends.
17. The method according to any preceding clause, wherein the analyzing comprises performing site specific performance (SSP) degradation, aggregation, offline water wash and fleet analytics.
18. The method according to any preceding clause, further comprising supporting a web portal by which each of a plurality of customers accesses the OSM data and the derived trends.

## Claims

1. A system (10) for performance monitoring of power plants (20), the system comprising:
a plurality of power plants (20) respectively owned and operated by a plurality of customers;
a monitoring center (40);
at least one of the customers and the monitoring center (40) including a plurality of analytic algorithms configured to automate performance anomaly detection, alarming, analytics and prognosis; and
a secured network (50) by which on-site monitoring (OSM) data generated at each of the plurality of the power plants is receivable by the monitoring center (40),
the monitoring center (40) being configured to analyze the OSM data along with site specific data for each respective power plant (20) in accordance with the plurality of analytics algorithms to derive trends and to take action with respect to each respective power plant (20) in accordance with changes and abnormalities indicated by the derived trends.

2. The system according to claim 1, wherein the monitoring center (40) is supportive of a web portal (60) by which each of the plurality of the customers accesses the OSM data and the OSM data analysis results.

3. The system according to claim 2, wherein the web portal (60) comprises at least one or more of fleet scorecards and comparisons, offline water wash statistics, descriptions of output and heat rate degradation trends and descriptions of fleet degradation comparisons.

4. The system according to claim 1, 2 or 3, wherein at least one of the monitoring center (40) and the customer is configured to perform site specific performance (SSP) degradation, aggregation, offline water wash and fleet analytics.

5. The system according to any preceding claim, wherein the monitoring center (40) is configured to issue multi-level alarms to each respective power plant in accordance with the SSP degradation analytics.

6. The system according to any preceding claim, wherein the monitoring center (40) is configured to perform multi-resolution aggregation of the OSM data for each respective power plant (20) in accordance with the SSP aggregation analytics.

7. The system according to any preceding claim, wherein the monitoring center (40) is configured to receive and analyze a portion of the OSM data relating to pre- and post-water wash effectiveness for each respective power plant (20) in accordance with the SSP offline water wash analytics.

8. The system according to any preceding claim, wherein the monitoring center (40) is configured to compare the OSM for each respective power plant (20) to fleet data in accordance with the SSP fleet analytics.

9. A method of performance monitoring of power plants (20), the method comprising:
establishing a secured network (50) by which on-site monitoring (OSM) data generated at each of a plurality of power plants (20) is receivable by a monitoring center (40);
analyzing the OSM data along with site specific data for each respective power plant (20);
deriving trends from the analysis of the OSM data and the site specific data in accordance with a plurality of analytics algorithms stored at the monitoring center (40) or at a customer site to derive trends; and
taking action, at the monitoring center (40), with respect to each respective power plant (20) in accordance with changes and abnormalities indicated by the derived trends.

10. The method according to claim 9, wherein the analyzing comprises performing site specific performance (SSP) degradation, aggregation, offline water wash and fleet analytics.

11. The method according to claim 9 or claim 10, further comprising supporting a web portal (60) by which each of a plurality of customers accesses the OSM data and the derived trends.
